# EUROPEAN PATENT SPECIFICATION

(11) **EP 2 830 124 B1**
(45) Date of publication and mention of the grant of the patent: **06.05.2020**
(21) Application number: 14178306.8
(22) Date of filing: 24.07.2014
(51) Int. Cl.: H01M 2/10, H01M 2/12

(54) **Battery module**
Batteriemodul
Module de batterie

(30) Priority: 26.07.2013 US 201361858834 P; 26.03.2014 US 201414226390
(43) Date of publication of application: 28.01.2015
(73) Proprietor: Samsung SDI Co., Ltd., Yongin-si, Gyeonggi-do (KR)
(72) Inventor: Lee, Jang-Wook, Yongin-si, Gyeonggi-do (KR); Im, Jang-Yeong, Yongin-si, Gyeonggi-do (KR)
(74) Representative: Ludwig, Ingo

(56) References cited:
- EP-A1- 2 381 507
- JP-A- 2009 170 258
- JP-A- 2010 251 019
- US-A1- 2012 040 234
- US-A1- 2013 034 755

## Description

### BACKGROUND

### 1. Field

The present invention relates to a battery module with a battery array, a pair of end blocks, a pair of side frames and a degassing device, the battery array comprising a plurality of battery cells arranged one after the other in a first direction, and a plurality of barriers, each of which being arranged between and holding two of the battery cells that are consecutively arranged in the first direction, the battery array being arranged between the end blocks in and between the side frames transversely to the first direction, the side frames being fixed to the end blocks, and the degassing device spanning the end blocks and the battery array and providing a passage for directing gas vented from the battery cells away from the battery module, wherein the degassing device is rigidly supporting the battery array, and more particularly, to a battery module available for an electric vehicle and a hybrid vehicle, etc.

### 2. Description of the Related Art

In general, secondary batteries can be reused by discharging and recharging, unlike primary batteries, which are not rechargeable. The secondary batteries are used as energy sources for mobile devices, electric vehicles, hybrid vehicles, electric bicycles, and uninterrruptible power supplies. The secondary batteries may be used in a single battery type or a battery module type composed of a plurality of batteries connected in one unit, in accordance with various available external devices. Battery modules are described e.g. in JP 2010 251019 A, JP 2009 170258 A, US 2013/0034755 A1 and EP 2 381 507 A1.

Although small mobile devices, such as cellular phones, can operate for a certain period of time with the output and capacity of a single battery, electric modules having larger output and capacity are often more suitable to operate electric vehicles and hybrid vehicles with high power for a long time because such vehicles consume a large amount of electricity. The battery modules are used by connecting a required number of batteries in parallel or series in accordance with output and capacity.

### SUMMARY

The invention provides a battery module of the above mentioned type and having an improved structural stability. Such a battery module is achieved according to the invention in that the barriers have protruding portions respectively formed at both ends of an upper portion of the barriers, the protruding portions protruding in the first direction, and receiving portions that correspond to the shape of the protruding portions, each of the receiving portions being formed opposite of a respective one of the protruding portions, wherein one end block of the pair of end blocks has a protruding portion that is insertable into the receiving portion of the barrier adjacent to the one end block, and the other end block of the pair of end blocks has a receiving portion in which the protruding portion of the barrier adjacent to the other end block is receivable.

The degassing device improves mechanical stability of the battery module without necessitating additional reinforcement structures. Hence, the weight and the volume of the battery module are not affected. The degassing device may be formed as a beam to receive and to transmit forces and the hold the battery array at least partly. Furthermore, forces, in particular perpendicular to the first direction, can be transmitted from one of the barriers to another one of the barriers, for instance from or to the reinforcement barrier, by the fastening member.

The solution according to the invention can be combined as desired and improved by the following further embodiments that are advantages on their own, in each case.

According to a firth possible embodiment, the degassing device can be fixed to at least one of the barriers. Thus, forces can be transmitted between the degassing device and the barrier, thereby further improving stability of the battery module.

In particular the degassing device may is fixed to at least one of the barriers by a mounting element. The mounting element can be easily installed.

The degassing device may rest against at least one of the end blocks and / or may be fixed to at least one of the end blocks. By resting against one or even both of the end blocks, forces transmitted from the barrier to the degassing device can be transferred to the end block. In case the degassing device is fixed to the end block or to both end blocks, the position of the degassing device relative to the end block is secured, facilitating and easy handling of the battery module and further improving stability.

In yet another possible embodiment, the battery module can comprise a reinforcing barrier that is added to or replaces one of the barriers. Preferably, it is the reinforcing barrier, to which the degassing device is fixed, The reinforcing barrier can furthermore be coupled to at least one of the side frames. Due to the reinforcement barrier, forces in different direction can be transmitted, thereby further improving stability.

At least one fastening opening can extend through the reinforcing barrier perpendicular to the first direction. Via the fastening opening, the degassing device can be coupled to the reinforcement barrier.

A maximum thickness of the reinforcing barrier along the first direction is preferably greater than a maximum thickness of at least one of the barriers. Thus, the reinforcement can be mechanically more stable and in particular in case it comprises the fastening opening, the mechanical stability still suffices for receiving forces from the degassing device and for directly holding at least one or even two of the battery cells.

The reinforcing barrier is preferably arranged in a central region of the battery array. Thus, a transfer of forces towards the reinforcement barrier can be balanced.

The battery module can comprise at least one fastening rod that extends through the fastening opening and that affixes the degassing device to the reinforcing barrier. The fastening rod can be a bolt. It provides for an easy, stable and probably even detachable connection between the degassing device and the reinforcement barrier.

The barriers may comprise at least one fastening member that is adapted to captively fix one of the barriers to another one of the barriers, e.g. by a force fit. Hence, the barriers may be attached to each other and to the end blocks non-relocatabley with respect to the battery cells and perpendicular to the first direction. Thus, forces, in particular perpendicular to the first direction, can be transmitted from one of the barriers to another one of the barriers, for instance from or to the reinforcement barrier, by the fastening member.

The fastening member is preferably adapted to captively fixe one of the barriers to another one of the barriers by a force fit. Hence, the barriers can be easily affixes to each other.

The side frames may each have a C-shaped cross-section perpendicular to the first direction. The side frames preferably each comprise two holding plates and one side plate interconnecting the two holding plates, wherein the side frames each encompass an edge region of the battery array. Therefore, also the side frames can contribute to the mechanical stability of the battery module and can carry the battery cells, for instance via the barriers.

The pair of end blocks, the pair of side frames and the degassing device may form a self-supporting structure for holding the battery array. A self-supporting structure itself keeps its form under influence of gravity. Furthermore, it can keep its form even if weight, for instance from the battery cells, is added. Moreover, it can preferably be handled as one piece. Thus the self-supporting structure not only improves stability, but furthermore provides for an easily to handle and to assemble battery module.

A surface of the reinforcing barrier that faces one of the side frames can comprise a material that is similar to a material of the adjacent side frame. Hence, the reinforcement barrier can be easily attached to the side frames, e.g. by a material fit.

The surface is preferably welded to the adjacent side frame, thereby providing a very stable material fit.

In other words:

The embodiments provide a battery module having a coupling structure, i.e. the degassing device, between barriers, which improves the structural rigidity of the battery module.

The battery array includes the plurality of battery cells arranged in the first direction, and the plurality of barriers respectively interposed between the battery cells. The pair of end blocks are respectively provided at outsides of the outermost battery cells of the battery array. The pair of side frames are respectively at both sides of the battery array along the first direction, and each side frame is fixed to the end blocks. The degassing device preferably has inlets formed at a lower portion thereof. The inlets allow gas exhausted from each battery cell through a vent element of the battery cell to flow through the degassing device. The degassing device provides a flow path through which the gas vented from the battery cells may flow. The degassing device may be formed of a metal material, and each end of the degassing device may be fixed to one of the end blocks, thereby improving the structural rigidity of the battery module.

Each barrier may have a protruding portion that protrudes in the first direction, and a receiving portion, in which the protruding portion can be inserted and which can be formed in the opposite direction to the first direction, so that adjacent barriers can be coupled to each other. The protruding portion and the receiving portion are preferably integrally provided by the fastening member.

Any one of the pair of end blocks may have a protruding portion that can be inserted into the receiving portion of the barrier adjacent to the one end block, and the other of the pair of end blocks may have a receiving portion in which the protruding portion of the barrier adjacent to the other end block can be received.

The battery module may further include the mounting element, which may for instance be formed as a band member, a clamp or a bracket configured to allow the degassing portion to be fixed to the pair of end blocks. A central portion of the mounting element may be provided to surround an outer circumferential surface of the degassing portion, and both end portions of the mounting element may be fixed to the respective end blocks through fastening elements, e.g. bolts.

The battery module may further include the reinforcing barrier which is substituted for any one of the barriers or added to any one of the barriers. The reinforcing barrier may be fixed to the pair of side frames and the degassing device, thereby improving the structural rigidity of the battery module.

The mounting element may allow the degassing portion to be fixed to the reinforcing barrier. The central portion of the mounting element may be provided to surround the outer circumferential surface of the degassing device at least sectionwise, and both the end portions of the mounting element may be fixed to the reinforcing barrier via the fastening elements.

Upper and lower end portions of the side frame may respectively bent toward upper and lower surfaces of the battery array. For instance, the upper and lower portions may extend along the upper and lower surfaces of the battery array and e.g. of the battery cells.

A buffer member may be provided between the upper end portion of the side frame and the upper surface of the battery array or cell.

According to the present invention, the outer frame structure of the battery module is preferably formed using the side frames, the end blocks and the degassing device made of a metal material, so that it is possible to improve the structural rigidity of the entire battery module.

Further, the buffer member may be provided between the side frame and the battery array, so that although the battery module is used for an electric vehicle or hybrid vehicle, it is possible to prevent external vibration from being directly transferred to the battery cells.

Furthermore, the reinforcing barrier can be fixed to the degassing device that is preferably made of the metal material, so that it is possible to maintain the structural stability of the battery module even when the entire length of the battery module increases, e.g. if more battery cells are to be arranged in the array.

### BRIEF DESCRIPTION OF THE DRAWINGS

Exemplary embodiments of the invention are described hereinafter with reference to the accompanying schematic drawings. The described embodiments are only possible configurations, in which, however, the individual features as described above can be provided independently of one another or can be omitted in the drawings.

It is to be understood that when an element is referred to as being "between" two elements, it can be the only element between the two elements, or one or more intervening elements may also be present. Like reference numerals refer to like elements throughout.
FIG. 1 is a perspective view showing a battery module according to an embodiment of the present invention.
FIG. 2 is an exploded perspective view showing the battery module according to the embodiment of FIG.1.
FIG. 3 is an exploded perspective view showing a barrier and a battery cell according to the embodiment of FIGS. 1 and 2.
FIG. 4 is a perspective view showing a reinforcing barrier according to the embodiment of FIGS. 1 to 3.
FIG. 5 is an exploded perspective view showing a coupling structure between an end block and barriers according to the embodiment of FIGS. 1 to 4.
FIG. 6 is a perspective view showing a degassing device according to the embodiment of the previous FIGS..
FIG. 7 is a bottom perspective view showing the degassing device according to the embodiment of FIG. 6.
FIG. 8 is a longitudinal cross-sectional view showing the reinforcing barrier according to the embodiment of the previous FIGS..
FIG. 9 is a perspective view showing a rigidity structure including the degassing device according to the embodiment of the previous FIGS..
FIG. 10 is a longitudinal cross-sectional view showing a state in which a central portion of the rigidity structure of FIG. 9 is cut away.

### DETAILED DESCRIPTION

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. In addition, when an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. Hereinafter, like reference numerals refer to like elements.

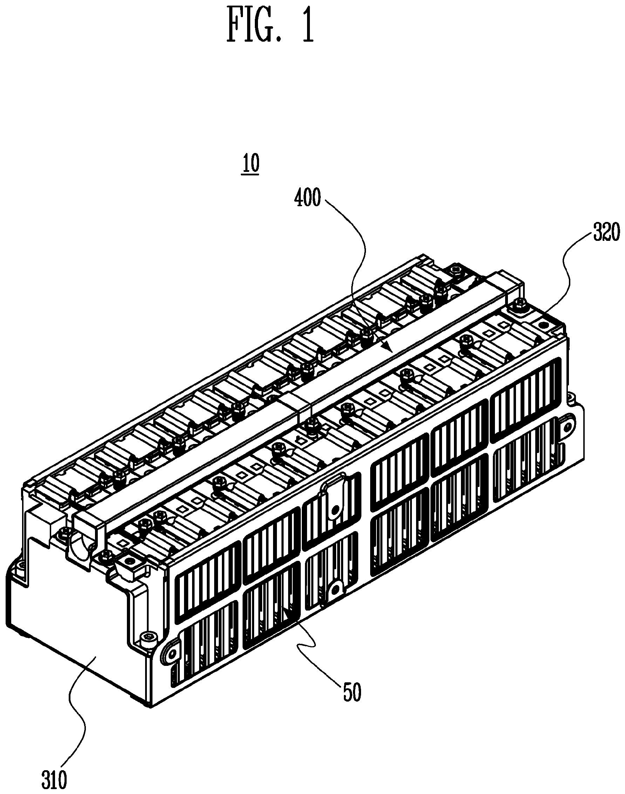

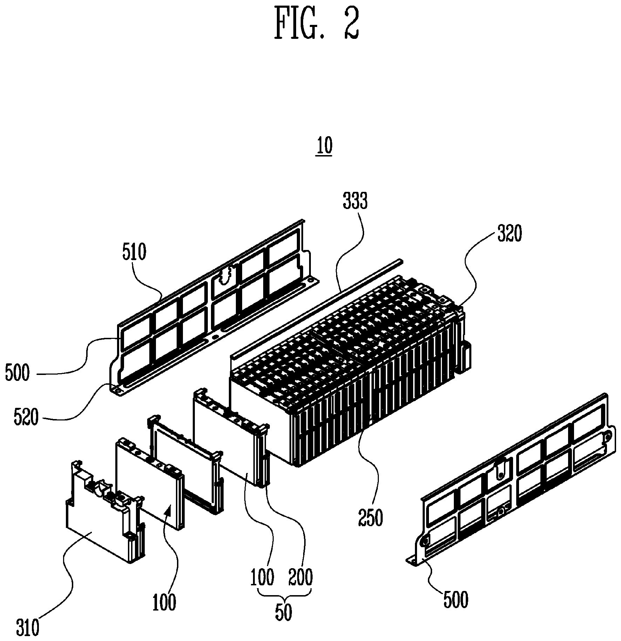

A battery module according to an embodiment of the present invention will be described with reference to FIGS. 1 and 2. FIG. 1 is a perspective view showing the battery module according to the embodiment of the present invention. FIG. 2 is an exploded perspective view showing the battery module according to the embodiment of the present invention.

As shown in FIGS. 1 and 2, the battery module 10 according to this embodiment has an outer frame structure in which a battery array 50 can be regularly fixed. The outer frame structure includes side frames 500, end blocks 310 and 320, and a reinforcing barrier 250.

The battery array 50 is formed so that a plurality of battery cells 100 and barriers 200 are arranged in one direction. A degassing device 400 configured to guide gas toward the outside of the battery module 10 is provided at an upper portion of the battery array 50. Here, the gas may be exhausted from the battery cells 100 of the battery array 50. The configuration and fastening of the degassing device 400 will be described in detail later.

The pair of end blocks 310 and 320 are respectively provided at both end portions of the barrier array 50, i.e., outsides of the outermost battery cells 100. The side frames 500 are respectively provided both sides of the battery cells 100 and the barriers 200.

In this case, the frames 500 and the end blocks 310 and 320 may be firmly fixed through structural coupling or screw fastening. When necessary, upper and lower portions of the side frame 500 may be bent to directly/indirectly support upper and lower portions of the battery array 50.

However, as the entire length of the battery module 10 gradually increases, the external shape of the battery module 10 is easily changed due to the weight of the battery cells 100 included in the battery module 10. The battery module 10 according to this embodiment may have the reinforcing barrier 250 provided at a central portion or the like of the battery module 10 in order to improve the structural stability of the battery module 10.

Meanwhile, in order to increase the structural rigidity of the battery module, an upper holding plate 510 , e.g. an upper bent surface and a lower holding plate 520, e.g. a lower bent surface may be respectively formed at upper and lower end portions of the side frame 500. Each of the upper and lower holding plates 510 and 520 may be formed in a shape bent toward the battery array 50.

A buffer member 333 may be provided between the battery array 50 and the upper holding plate 510. The buffer member 333 absorbs impact between the upper holding plate 510 and the battery array 50, so that it is possible to prevent external vibration or the like from being directly transferred to the battery cell 110.

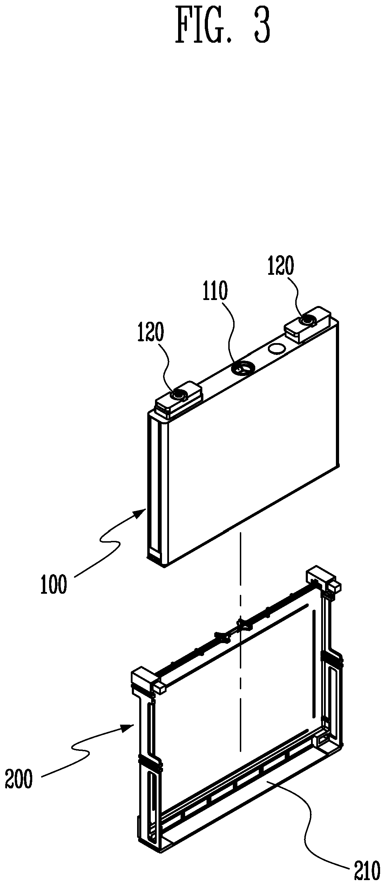

The battery cell and the barrier according to this embodiment will be described with reference to FIG. 3. FIG. 3 is an exploded perspective view showing the barrier and the battery cell according to the embodiment of the present invention.

The battery cell 100 has electrical terminals 120 exposed at an upper portion thereof, and a vent element 110 provided between the terminals 120. The vent element 110 is a portion through which internal gas caused by an abnormal operation of the battery cell 100 is exhausted to the outside of the battery cell 100.

The barrier 200 may be formed as a partition wall which allows the battery cell 100 to be spaced apart from the other battery cells. The barrier 200 may serve as a structure which maintains an exact interval between the battery cells 10 or press the battery cells 100. The barrier 200 according to this embodiment has a battery mounting portion 210. The battery cell 100 is mounted on the battery mounting portion 210. The battery cell 100 and the barrier 200 are repetitively arranged in a state in which the battery cell 100 and the barrier 200 are coupled as described above.

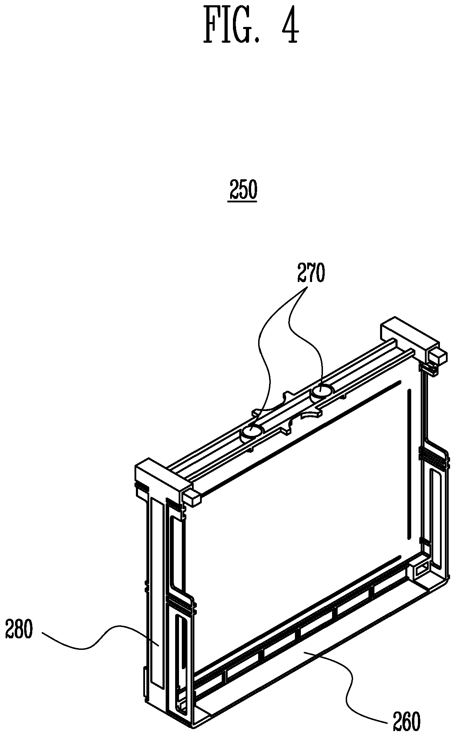

The reinforcing barrier will be described with reference to FIG. 4. FIG. 4 is a perspective view showing the reinforcing barrier according to the embodiment of the present invention.

As shown in FIG. 4, the shape of the reinforcing barrier 250 is similar to that of the barrier described above. That is, the reinforcing barrier 250 is entirely formed into a partition wall structure, and a mounting portion 260 is formed at a lower portion of the reinforcing barrier 250 so that the battery cell can be mounted thereon.

Here, the reinforcing barrier 250 is a portion which performs not only a simple function of allowing the battery cells to be spaced apart from each other and maintain the interval between the battery cells but also a function of forming an outer frame structure, i.e., a rigidity structure of the battery module by being fastened to other portions. A fastening opening 270 through which the reinforcing barrier 250 is fastened to other portions is formed in the reinforcing barrier 250. The fastening portion 270 allows the degassing device to be fixed using a mounting element described later. This will be described in detail later.

The reinforcing barrier 250 may have various types of fastening structures so that the side frame is fastened to a surface 280 of the reinforcing barrier 250, which faces the side frame. For example, a bolt receiving hole corresponding to a bolt is formed in the surface 280 of the reinforcing barrier 250, so that the surface 280 can be fastened to the side frame. As such, the reinforcing barrier 250 is a portion which increases the rigidity of the battery module, and therefore, the thickness of the reinforcing barrier 250 is preferably further increased as compared with other barriers.

The side frame is a portion on which most of the entire load of the battery module is concentrated. The side frame is formed using a material such as stainless steel, which has a certain rigidity or more. On the other hand, like a general barrier, the reinforcing barrier 250 performs a function of allowing the battery cells to be spaced apart and insulated from each other. Therefore, the reinforcing barrier 250 is preferably formed of a synthetic resin material.

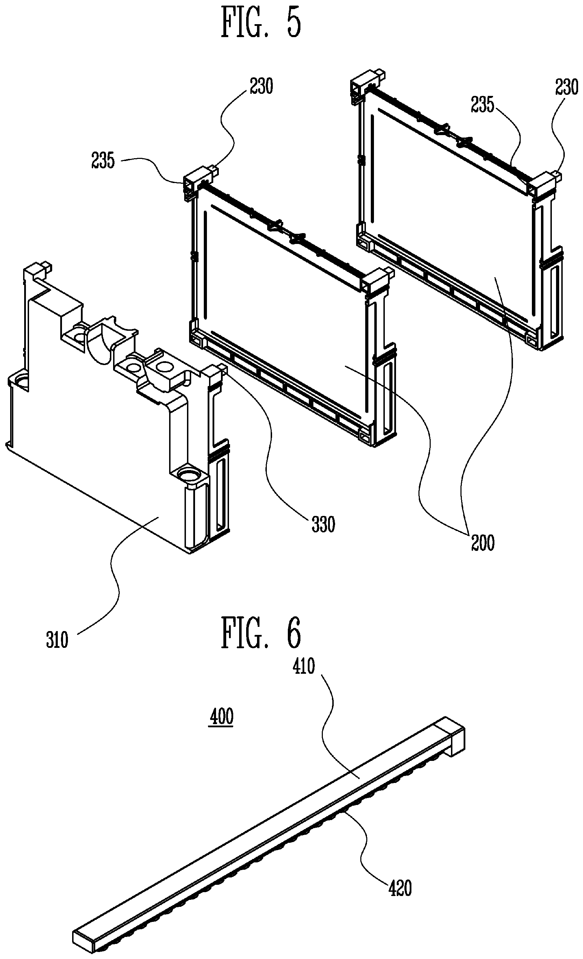

The coupling structure between the end block and the barriers will be described with reference to FIG. 5. FIG. 5 is an exploded perspective view showing the coupling structure between the end block and the barriers according to the embodiment of the present invention.

The end block 310 is provided at the outermost portion of the battery module. The battery module has a coupling structure in which the end block 310 and the barrier 200 are coupled to each other. The barrier 200 according to this embodiment has protruding portions 230 respectively formed at both ends of the upper portion thereof. Here, the protruding portion 230 is protruded in the arrangement direction of the battery cells. A receiving portion 235 corresponding to the shape of the protruding portion 230 is formed at the opposite side of the protruding portion 230. As such, the barrier 200 has the protruding portion 230 protruded in one direction and a receiving portion 235 formed at the other side to receive the protruding portion 230, so that the protruding portion 230 of a specific barrier 200 is coupled to the receiving portion 235 of another barrier 200 adjacent to the specific barrier 200. Meanwhile, one end block 310 has only protruding portions 330 protruded toward the barrier 200, and the other end block (not shown) has only receiving portions 335 corresponding to the respective protruding portions 330. Accordingly, the end block 310 and the barriers 200 are coupled to each other through the coupling structure described above.

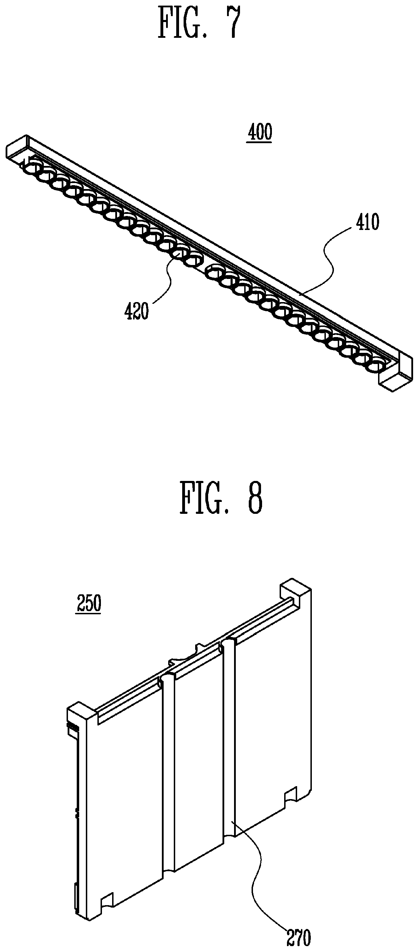

The degassing device will be described with reference to FIGS. 6 and 7. FIG. 6 is a perspective view showing the degassing device according to the embodiment of the present invention. FIG. 7 is a bottom perspective view showing the degassing device according to the present invention.

The degassing device 400 according to this embodiment is formed in the shape of a hollow rectangular parallelepiped. That is, inlets 420 through which the gas exhausted to the outside of the battery cell through the vent element described above is flowed in the degassing device 400 are formed on a bottom surface of the degassing device 400. A flow path through which the gas flowed in the degassing 410 through the inlets 420 is guided to the outside of the battery module is formed inside a body 410 of the degassing device 400.

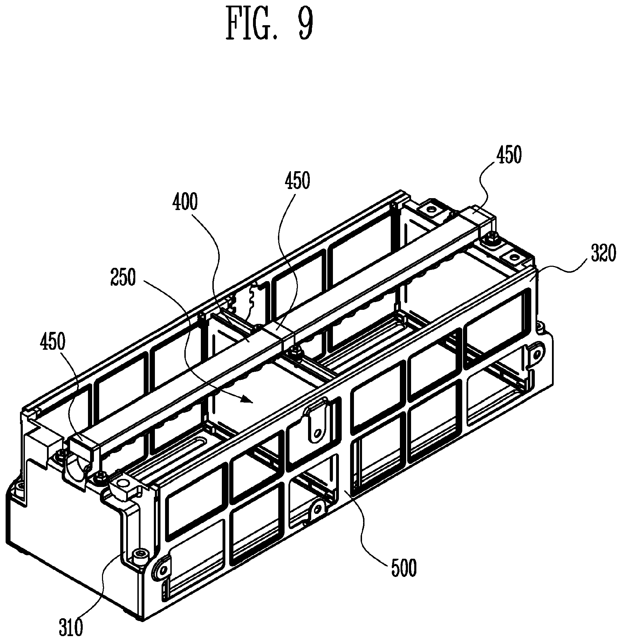

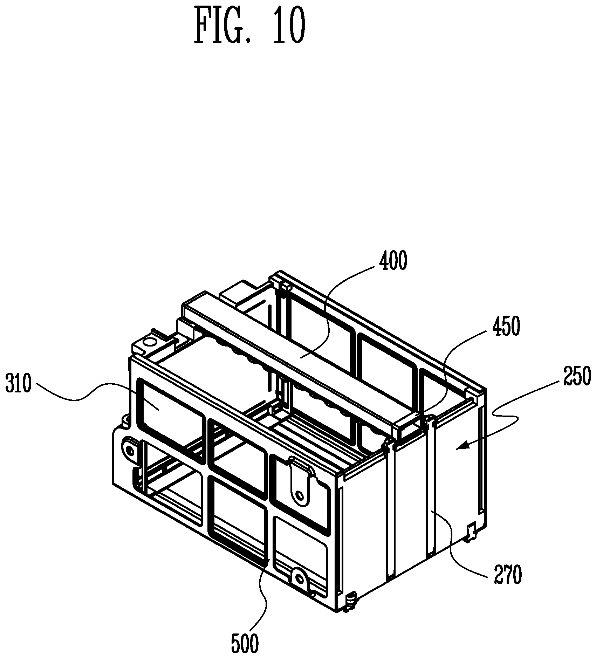

The outer frame structure, i.e., the rigidity structure of the battery module will be described with FIGS. 8 to 10. FIG. 8 is a longitudinal sectional view showing the reinforcing barrier according to the embodiment of the present invention. FIG. 9 is a perspective view showing the rigidity structure including the degassing device according to the embodiment of the present invention. FIG. 10 is a longitudinal sectional view showing a state in which a central portion of the rigidity structure of FIG. 9 is cut away.

As described above, the reinforcing barrier 250 has the fastening opening 270 passing through the top and bottom thereof. As shown in FIG. 9, the pair of side frames 500 and the pair of end blocks 310 and 320 are fastened or fixed to each other, so as to form the outer frame structure in terms of the structure of the battery module. In this case, both end portions of the reinforcing barrier 250 are respectively fixed to central portions of the side frames 500. The reinforcing barrier 250 is fixed to the degassing device 400 through a mounting element 450. The degassing device 400 is also fixed to the end blocks 310 and 320 through the mounting element 450.

A central portion of the mounting element 450 is provided to surround an outer circumferential surface of the degassing device 400, and both end portions of the mounting element 450 are fixed to the fastening opening 270 by bolts as shown in FIG. 10. The degassing device 400 according to this embodiment is formed of a metal material. In the related art battery module, components related to degassing are simply limited to the function of allowing internal gas to be exhausted to the outside of the battery module. However, in the battery module according to this embodiment, the degassing device 400 is formed of the metal material, and the coupling structure between the degassing device 400 and the rigidity structure is introduced to the battery module, so that it is possible to increase the structural rigidity of the entire battery module.

That is, the degassing device 400 made of the metal material is connected to the reinforcing barrier 250, the side frame 500 and the like, so that it is possible to the rigidity structure from distorted at the central portion of the degassing device 400 or being sunk downward by the weight of the battery cells.

## Claims

1. A battery module (10) with a battery array (50), a pair of end blocks (310, 320), a pair of side frames (500) and a degassing device (400),
the battery array (50) comprising a plurality of battery cells (100) arranged one after the other in a first direction, and a plurality of barriers (200, 250), each of which being arranged between and holding two of the battery cells (100) that are consecutively arranged in the first direction,
the battery array (50) being arranged between the end blocks (310, 320) in and between the side frames (500) transversely to the first direction,
the side frames (500) being fixed to the end blocks(310, 320), and
the degassing device (400) spanning the end blocks (310, 320) and the battery array (50) and providing a passage for directing gas vented from the battery cells (100) away from the battery module (10), wherein
the degassing device (400) is rigidly supporting the battery array (50), **characterized in that**
the barriers (200, 250) have protruding portions (230) respectively formed at both ends of an upper portion of the barriers (200, 250), the protruding portions (230) protruding in the first direction, and receiving portions (235) that correspond to the shape of the protruding portions (230), each of the receiving portions (235) being formed opposite of a respective one of the protruding portions (230), wherein
one end block (310) of the pair of end blocks (310, 320) has a protruding portion (330) that is insertable into the receiving portion (235) of the barrier (200) adjacent to the one end block (310), and the other end block (320) of the pair of end blocks (310, 320) has a receiving portion (335) in which the protruding portion (230) of the barrier (200) adjacent to the other end block (320) is receivable.

2. The battery module (10) as claimed in claim 1, **characterized in that** the degassing device (400) is fixed to at least one of the barriers (200, 250).

3. The battery module (10) as claimed in claim 2, **characterized in that** the degassing device (400) is fixed to at least one of the barriers (200, 250) by a mounting element (450).

4. The battery module (10) as claimed in any of claims 1 to 3, **characterized in that** the degassing device (400) rests against at least one of the end blocks (310, 320) and / or is fixed to at least one of the end blocks (310, 320).

5. The battery module (10) as claimed in any of claims 2 to 4, **characterized by** a reinforcing barrier (250) that is added to or replaces one of the barriers (200), wherein it is the reinforcing barrier (250) to which the degassing device (400) is fixed, the reinforcing barrier (250) furthermore being coupled to at least one of the side frames (500).

6. The battery module (10) as claimed in claim 5, **characterized in that** at least one fastening opening (270) extends through the reinforcing barrier (250) perpendicular to the first direction.

7. The battery module (10) as claimed in claim 5 or 6, **characterized in that** a maximum thickness of the reinforcing barrier (250) along the first direction is greater than a maximum thickness of at least one of the barriers (200).

8. The battery module (10) as claimed in any of claims 5 to 7, **characterized in that** the reinforcing barrier (250) is arranged in a central region of the battery array (50).

9. The battery module (10) as claimed in any of claims 6 to 8, **characterized in that** the battery module (10) comprises at least one fastening rod that extends through the fastening opening (270) and that affixes the degassing device (400) to the reinforcing barrier (250).

10. The battery module (10) as claimed in claim 1, **characterized in that** the fastening member is adapted to captively fixe one of the barriers (200 ,250) to another one of the barriers (200, 250) by a force fit.

11. The battery module (10) as claimed in any of claims 1 to 10, **characterized in that** the side frames (500) each have a C-shaped cross-section perpendicular to the first direction, the side frames (500) each comprising two holding plates (510, 520) and one side plate interconnecting the two holding plates (510, 520), wherein the side frames (500) each encompass an edge region of the battery array (50).

12. The battery module (10) as claimed in any of claims 1 to 11, **characterized in that** the pair of end blocks (310, 320), the pair of side frames (500) and the degassing device (400) form a self-supporting structure for holding the battery array (50).

13. The battery module (10) as claimed in any of claims 1 to 12, **characterized in that** a surface (280) of the reinforcing barrier (250) that faces one of the side frames (500) comprises a material that is similar to a material of the adjacent side frame (500).

14. The battery module (10) as claimed in claim 13, **characterized in that** the surface (280) is welded to the adjacent side frame (500).

## Patentansprüche

1. Ein Batteriemodul (10) mit einer Batterieanordnung (50), einem Paar von Endblöcken (310, 320), einem Paar von Seitenrahmen (500) und einer Entgasungsvorrichtung (400),
wobei die Batterieanordnung (50) eine Vielzahl von Batteriezellen (100), die eine nach der anderen in einer ersten Richtung angeordnet sind, und eine Vielzahl von Barrieren (200, 250), von denen jede zwischen zwei der Batteriezellen (100), die nacheinander in der ersten Richtung angeordnet sind, angeordnet ist und diese hält, aufweist,
wobei die Batterieanordnung (50) zwischen den Endblöcken (310, 320) in und zwischen den Seitenrahmen (500) quer zur ersten Richtung angeordnet ist,
wobei die Seitenrahmen (500) an den Endblöcken (310, 320) befestigt sind, und
wobei die Entgasungsvorrichtung (400) die Endblöcke (310, 320) und die Batterieanordnung (50) umspannt und einen Durchgang bereitstellt, um Gas, das von den Batteriezellen (100) entlüftet wird, vom Batteriemodul (10) weg zu lenken, wobei
die Entgasungsvorrichtung (400) die Batterieanordnung (50) starr trägt, **dadurch gekennzeichnet, dass**
die Barrieren (200, 250) vorstehende Abschnitte (230), die jeweils an beiden Enden eines oberen Abschnitts der Barrieren (200, 250) ausgebildet sind, aufweisen, wobei die vorstehenden Abschnitte (230) in die erste Richtung vorstehen, und Aufnahmeabschnitte (235), die der Form der vorstehenden Abschnitte (230) entsprechen, aufweisen, wobei jeder der Aufnahmeabschnitte (235) einem jeweiligen der vorstehenden Abschnitte (230) gegenüber ausgebildet ist, wobei
ein Endblock (310) des Paars von Endblöcken (310, 320) einen vorstehenden Abschnitt (330), der in den Aufnahmeabschnitt (235) der zum einen Endblock (310) benachbarten Barriere (200) eingesetzt werden kann, aufweist und der andere Endblock (320) des Paars von Endblöcken (310, 320) einen Aufnahmeabschnitt (335), in dem der vorstehende Abschnitt (230) der zum anderen Endblock (320) benachbarten Barriere (200) aufgenommen werden kann, aufweist.

2. Das Batteriemodul (10) nach Anspruch 1, **dadurch gekennzeichnet, dass** die Entgasungsvorrichtung (400) an zumindest einer der Barrieren (200, 250) befestigt ist.

3. Das Batteriemodul (10) nach Anspruch 2, **dadurch gekennzeichnet, dass** die Entgasungsvorrichtung (400) durch ein Montageelement (450) an zumindest einer der Barrieren (200, 250) befestigt ist.

4. Das Batteriemodul (10) nach einem der Ansprüche 1 bis 3, **dadurch gekennzeichnet, dass** die Entgasungsvorrichtung (400) an zumindest einem der Endblöcke (310, 320) anliegt und/oder an zumindest einem der Endblöcke (310, 320) befestigt ist.

5. Das Batteriemodul (10) nach einem der Ansprüche 2 bis 4, **gekennzeichnet durch** eine Verstärkungsbarriere (250), die zu einer der Barrieren (200) hinzugefügt wird oder diese ersetzt, wobei es die Verstärkungsbarriere (250) ist, an der die Entgasungsvorrichtung (400) befestigt ist, wobei die Verstärkungsbarriere (250) ferner mit zumindest einem der Seitenrahmen (500) gekoppelt ist.

6. Das Batteriemodul (10) nach Anspruch 5, **dadurch gekennzeichnet, dass** sich zumindest eine Befestigungsöffnung (270) durch die Verstärkungsbarriere (250) perpendikulär zur ersten Richtung erstreckt.

7. Das Batteriemodul (10) nach Anspruch 5 oder 6, **dadurch gekennzeichnet, dass** eine maximale Dicke der Verstärkungsbarriere (250) entlang der ersten Richtung größer als eine maximale Dicke zumindest einer der Barrieren (200) ist.

8. Das Batteriemodul (10) nach einem der Ansprüche 5 bis 7, **dadurch gekennzeichnet, dass** die Verstärkungsbarriere (250) in einem mittleren Bereich der Batterieanordnung (50) angeordnet ist.

9. Das Batteriemodul (10) nach einem der Ansprüche 6 bis 8, **dadurch gekennzeichnet, dass** das Batteriemodul (10) zumindest eine Befestigungsstange, die sich durch die Befestigungsöffnung (270) erstreckt und die die Entgasungsvorrichtung (400) an der Verstärkungsbarriere (250) befestigt, aufweist.

10. Das Batteriemodul (10) nach Anspruch 1, **dadurch gekennzeichnet, dass** das Befestigungselement angepasst ist, um eine der Barrieren (200, 260) durch Presssitz an einer anderen der Barrieren (200, 250) unverlierbar zu befestigen.

11. Das Batteriemodul (10) nach einem der Ansprüche 1 bis 10, **dadurch gekennzeichnet, dass** die Seitenrahmen (500) jeweils einen C-förmigen Querschnitt perpendikulär zur ersten Richtung aufweisen, wobei die Seitenrahmen (500) jeweils zwei Halteplatten (510, 520) und eine Seitenplatte, die die zwei Halteplatten (510, 520) miteinander verbindet, aufweisen, wobei die Seitenrahmen (500) jeweils einen Randbereich der Batterieanordnung (50) umgeben.

12. Das Batteriemodul (10) nach einem der Ansprüche 1 bis 11, **dadurch gekennzeichnet, dass** das Paar von Endblöcken (310, 320), das Paar von Seitenrahmen (500) und die Entgasungsvorrichtung (400) eine selbsttragende Struktur zum Halten der Batterieanordnung (50) ausbilden.

13. Das Batteriemodul (10) nach einem der Ansprüche 1 bis 12, **dadurch gekennzeichnet, dass** eine Oberfläche (280) der Verstärkungsbarriere (250), die einem der Seitenrahmen (500) zugewandt ist, ein Material, das einem Material des benachbarten Seitenrahmens (500) ähnlich ist, aufweist.

14. Das Batteriemodul (10) nach Anspruch 13, **dadurch gekennzeichnet, dass** die Oberfläche (280) am benachbarten Seitenrahmen (500) angeschweißt ist.

## Revendications

1. Module de batterie (10) avec un réseau de batteries (50), une paire de blocs d'extrémité (310, 320), une paire de bâtis latéraux (500) et un dispositif de dégazage (400),
le réseau de batteries (50) comprenant une pluralité d'éléments de batterie (100) agencés l'un après l'autre dans une première direction, et une pluralité de barrières (200, 250), dont chacune est agencée entre et maintient deux des éléments de batterie (100) qui sont agencés de manière consécutive dans la première direction,
le réseau de batteries (50) étant agencé entre les blocs d'extrémité (310, 320) dans et entre les bâtis latéraux (500) transversalement par rapport à la première direction,
les bâtis latéraux (500) étant fixés sur les blocs d'extrémité (310, 320), et
le dispositif de dégazage (400) s'étendant sur les blocs d'extrémité (310, 320) et le réseau de batteries (50) et fournissant un passage pour diriger le gaz évacué des éléments de batterie (100) à distance du module de batterie (10), où :
le dispositif de dégazage (400) supporte, de manière rigide, le réseau de batterie (50), **caractérisé en ce que** :
les barrières (200, 250) ont des parties en saillie (230) respectivement formées aux deux extrémités d'une partie supérieure des barrières (200, 250), les parties en saillie (230) faisant saillie dans la première direction, et recevant des parties (235) qui correspondent à la forme des parties en saillie (230), chacune des parties de réception (235) étant formée à l'opposé d'une partie respective des parties en saillie (230), où :
un bloc d'extrémité (310) de la paire de blocs d'extrémité (310, 320) a une partie en saillie (330) qui peut être insérée dans la partie de réception (235) de la barrière (200) adjacente au premier bloc d'extrémité (310), et l'autre bloc d'extrémité (320) de la paire de blocs d'extrémité (310, 320) a une partie de réception (335) dans laquelle la partie en saillie (230) de la barrière (200) adjacente à l'autre bloc d'extrémité (320) peut être reçue.

2. Module de batterie (10) selon la revendication 1, **caractérisé en ce que** le dispositif de dégazage (400) est fixé sur au moins l'une des barrières (200, 250).

3. Module de batterie (10) selon la revendication 2, **caractérisé en ce que** le dispositif de dégazage (400) est fixé sur au moins l'une des barrières (200, 250) par un élément de montage (450).

4. Module de batterie (10) selon l'une quelconque des revendications 1 à 3, **caractérisé en ce que** le dispositif de dégazage (400) s'appuie contre au moins l'un des blocs d'extrémité (310, 320) et/ou est fixé sur au moins l'un des blocs d'extrémité (310, 320).

5. Module de batterie (10) selon l'une quelconque des revendications 2 à 4, **caractérisé par** une barrière de renforcement (250) qui est ajoutée ou remplace l'une des barrières (200), où il s'agit de la barrière de renforcement (250) à laquelle le dispositif de dégazage (400) est fixé, la barrière de renforcement (250) étant en outre couplée à au moins l'un des bâtis latéraux (500).

6. Module de batterie (10) selon la revendication 5, **caractérisé en ce qu'**au moins une ouverture de fixation (270) s'étend à travers la barrière de renforcement (250) perpendiculaire à la première direction.

7. Module de batterie (10) selon la revendication 5 ou 6, **caractérisé en ce qu'**une épaisseur maximum de la barrière de renforcement (250) le long de la première direction est supérieure à une épaisseur maximum d'au moins l'une des barrières (200).

8. Module de batterie (10) selon l'une quelconque des revendications 5 à 7, **caractérisé en ce que** la barrière de renforcement (250) est agencée dans une région centrale du réseau de batterie (50).

9. Module de batterie (10) selon l'une quelconque des revendications 6 à 8, **caractérisé en ce que** le module de batterie (10) comprend au moins une tige de fixation qui s'étend à travers l'ouverture de fixation (270) et qui fixe le dispositif de dégazage (400) à la barrière de renforcement (250).

10. Module de batterie (10) selon la revendication 1, **caractérisé en ce que** l'élément de fixation est adapté pour fixer, de manière captive, l'une des barrières (200, 250) à une autre des barrières (200, 250) par un ajustement à force.

11. Module de batterie (10) selon l'une quelconque des revendications 1 à 10, **caractérisé en ce que** les bâtis latéraux (500) ont chacun une section transversale en forme de C perpendiculaire à la première direction, les bâtis latéraux (500) comprenant chacun deux plaques de support (510, 520) et une plaque latérale interconnectant les deux plaques de support (510, 520), dans lequel les bâtis latéraux (500) englobent chacun une région de bord du réseau de batteries (50).

12. Module de batterie (10) selon l'une quelconque des revendications 1 à 11, **caractérisé en ce que** la paire de blocs d'extrémité (310, 320), la paire de bâtis latéraux (500) et le dispositif de dégazage (400) forment une structure autoporteuse pour maintenir le réseau de batteries (50).

13. Module de batterie (10) selon l'une quelconque des revendications 1 à 12, **caractérisé en ce qu'**une surface (280) de la barrière de renforcement (250) qui fait face à l'un des bâtis latéraux (500) comprend un matériau qui est similaire à un matériau du bâti latéral (500) adjacent.

14. Module de batterie (10) selon la revendication 13, **caractérisé en ce que** la surface (280) est soudée au bâti latéral (500) adjacent.
